# EUROPÄISCHE PATENTANMELDUNG

(11) **EP 2 429 046 A2**
(43) Veröffentlichungstag der Anmeldung: **14.03.2012**
(21) Anmeldenummer: 11006783.2
(22) Anmeldetag: 19.08.2011
(51) Int. Cl.: H02B 1/01

(54) **Elektrischer Schaltschrank**

(30) Priorität: 08.09.2010 DE 102010044761
(71) Anmelder: ABB AG, 68309 Mannheim (DE)
(72) Erfinder: Roth, Michael, 77880 Sasbach (DE)

(57) **Zusammenfassung**

Die Erfindung betrifft einen elektrischen Schaltschrank (10) mit zwei Seitenwandteilen (12) und je einem Deckel- und Bodenwandteil (14), welche jeweils miteinander einstückig verbunden sind, insbesondere vorzugsweise miteinander verschweißt sindund einen rechteckförmigen Rahmen bilden, der mit einer Rückseite und mit einer Frontseite verbindbar ist, wobei jedes Seitenwandteil (12) und jedes Deckel- beziehungsweise Bodenwandteil (14) entlang seiner Außenkanten (30) zu einer kastenähnlichen Form abgewinkelt ist, die abgewinkelten Kanten an den Stoßstellen (32) mit benachbarten abgewinkelten Außenkanten miteinander einstückig verbunden sind und an jeder Rahmenecke ein Eckprofil bilden, an welchem jeweils ein Verbindungsprofil (20) anschließbar ist. Darüber hinaus wird ein Schaltschrankverbindungsprofil (20) der vorgenannten Art zur insbesondere kraftschlüssigen Verbindung von wenigstens zwei Schaltschränken beansprucht.

## Beschreibung

Die Erfindung betrifft einen elektrischen Schaltschrank mit je einem Deckel- und Bodenwandteil und zwei Seitenwandteilen, welche jeweils miteinander einstückig verbunden sind und einen rechteckförmigen Rahmen bilden. Vorzugsweise sind hierbei die Seitenwandteile mit den Deckel- oder Bodenwandteilen verschweißt sowie gegebenenfalls mit einer Rückseite und/oder mit einer Frontseite verbindbar. Des Weiteren betrifft die Erfindung ein Schaltschrankverbindungsprofil zur kraftschlüssigen Verbindung von wenigstens zwei Schaltschränken.

Es ist bekannt, dass elektrische Schaltschränke üblicherweise als Wandschränke ausgebildet sind und zur Unterbringung elektrischer Schaltgeräte sowie von elektrischen Sicherungen und dergleichen vorgesehen sind.

Häufig sind elektrische Schaltschränke in die Wand eingelassen und mit einer Frontseite versehen, die bündig mit der Wand abschließt. In anderen Fällen sind die elektrischen Schaltschränke auf der Wandoberfläche angeordnet.

In den meisten Fällen jedoch, insbesondere wenn der Schaltschrank für den Wohnbereich vorgesehen ist, wird seitens der Nutzer solcher Schaltschränke großer Wert auf deren gefälliges Äußeres gelegt, so dass der elektrische Schaltschrank als solcher und seine technische Bestimmung möglichst nicht zu erkennen sind.

Hierzu wird beispielsweise die Frontseite des betreffenden Wandschranks mit einem schwenkbar angeordneten Bild oder Spiegel verdeckt oder mit anderen Designelementen versehen, um so die tatsächliche Zweckbestimmung des betreffenden Möbelstücks zu verschleiern.

Aber auch bei Verwendung derartiger elektrischer Schaltschränke im Bürobereich oder in industriellen Anlagen wird seitens der Betreiber Wert auf ein angemessenes Erscheinungsbild gelegt, das heißt, der Schaltschrank kann zwar als solcher erkennbar sein, soll aber dennoch ansprechend gestaltet sein.

Ausgehend von diesem Stand der Technik ist es Aufgabe der Erfindung, einen elektrischen Schaltschrank der eingangs genannten Art zu schaffen, der günstig herstellbar ist und vielseitig einsetzbar ist, wobei sein Äußeres eine ansprechende Gestaltung aufweist.

Diese Aufgabe wird erfindungsgemäß durch einen Schaltschrank mit den kennzeichnenden Merkmalen des Anspruches 1 gelöst. Vorteilhafte Ausgestaltungen und Weiterbildungen der Erfindung sowie ein demgemäßes Schaltschrankverbindungsprofil sind in weiteren Ansprüchen und der nachfolgenden Beschreibung angegeben.

Demgemäß ist erfindungsgemäß vorgesehen, dass jedes Seitenwandteil und jedes Deckel- beziehungsweise Bodenwandteil entlang seiner Außenkanten zu einer kastenähnlichen Form abgewinkelt ist, dass die abgewinkelten Kanten an den Stoßstellen mit benachbarten abgewinkelten Außenkanten miteinander insbesondere einstückig verbunden sind und an jeder Rahmenecke ein Eckprofil bilden, an welchem jeweils ein Verbindungsprofil anschließbar ist.

Hierbei erweist es sich als vorteilhaft, dass die jeweils aneinanderstoßenden Kanten jedes Seitenwandteils und jedes daran angrenzenden Deckel- beziehungsweise Bodenwandteils sowie deren Verbindungen miteinander mittels Schweißen, vorzugsweise mittels Laserschweißen, bearbeitet sind. Hierbei erfolgt zunächst eine Heftung der miteinander zu verbindenden Kanten beziehungsweise Wandteile und dann die Herstellung der geschweißten Verbindung.

Gemäß einer vorteilhaften Ausführungsform der Erfindung bildet das an jeder Rahmenecke, die jeweils von einem Seitenwandteil mit einem Deckelwandteil beziehungsweise mit einem Bodenwandteil gebildet ist, angeordnete Verbindungsprofil mit den jeweils benachbarten Wandteilen der Rahmenecke eine zumindest optische Verbindung derart, dass die an sich an jeder Rahmenecke vorhandene winkelförmige Stufe durch das Verbindungsprofil bündig abschließend ausgefüllt ist.

In weiterer Ausgestaltung des erfindungsgemäßen Elektrischen Schaltschranks ist das zur Anbringung im Eckprofil vorgesehene Verbindungsprofil mehrteilig ausgebildet.

Danach ist vorgesehen, dass das Verbindungsprofil beziehungsweise Schaltschankverbindungsprofil von einem Kernprofil, einem Deckprofil beziehungsweise einem Halteprofil und wenigstens einer an einem Profilende aufsetzbaren Kappe gebildet ist. Hierbei ist das Kernprofil zur Verankerung an dem Rahmen beziehungsweise an der Rahmenecke vorgesehen, während das Deckprofil sowie die an einem Profilende aufsetzbare Kappe das äußere Erscheinungsbild aufwertet und auch als Designmerkmal dient.

Eine weitere Verbesserung der Erfindung ist dadurch gekennzeichnet, dass das Kernprofil eines jeden Verbindungsprofils gleich gestaltet ist, das heißt alle Kernprofile für die betreffende Baureihe des erfindungsgemäßen Elektrischen Schaltschranks sind identisch und demgemäß universell bei allen entsprechenden Schaltschränken verwendbar.

Gemäß einer bevorzugten Ausführungsform der Erfindung ist das Kernprofil teiloffen gestaltet, wobei der Querschnitt des Kernprofils als Grundform ein Quadrat mit abgerundeten Ecken aufweist, von denen eine Ecke mit daran anschließenden Flanken jeweils wenigstens bis zur Hälfte der Kantenlänge des Quadrates entfernt ist. Das heißt mit anderen Worten, das Quadrat ist hier offen und demgemäß das Kernprofil entlang seiner Längsachse auch.

Beim Einbau des Kernprofils in das Eckprofil des betreffenden Rahmens ist vorgesehen, dass das offene Eck des Kernprofils in Richtung der Diagonale des Rahmens nach außen weist, das heißt, der offene Bereich bildet den eckseitigen Abschluss des mit dem Eckprofil versehenen Rahmens.

Gemäß einer weiteren vorteilhaften Ausführungsform der Erfindung ist vorgesehen, dass das Deck- beziehungsweise Halteprofil am Kernprofil anbringbar ist, das heißt, das Deck- beziehungsweise Halteprofil kann mittels Schieben, Ansetzen oder Aufstecken beziehungsweise Aufclipsen form- und gegebenenfalls kraftschlüssig mit dem Kernprofil verbunden werden, wobei es in seiner bestimmungsgemäßen Einbaulage bündig mit der Oberfläche des jeweiligen Seitenwandteils oder Deckel- beziehungsweise Bodenwandteils abschließt.

Gemäß einer bevorzugten Ausgestaltung der Erfindung weist jedes Deckprofil zwei längsverlaufende, zueinander orthogonal angeordnete Längskanten auf, an welche jeweils unter einem Winkel kleiner 90° ein längsverlaufender Verbindungssteg anschließt und auf diese Weise ein Winkelprofil bildet, an dessen Innenseite zwei längsverlaufende Haltenuten angeformt sind. Das Deckprofil bestimmt dementsprechend die Außenkontur jedes erfindungsgemäß ausgebildeten Schaltschranks.

Dabei ist entsprechend einer erfindungsgemäßen Weiterbildung vorgesehen, dass die Haltenuten dazu dienen, jeweils mit den entsprechenden Längskanten des teiloffenen Kernprofils zusammenzuarbeiten, indem die offenen Flanken der das Kernprofil bildenden Teilstege jeweils in die hierfür vorgesehenen Haltenuten eingreifen.

Gemäß einer bevorzugten Ausgestaltung der Erfindung ist weiterhin vorgesehen, dass das Halteprofil als ein sich längs erstreckender Steg ausgebildet ist, an dessen beiden Längskanten jeweils zur gleichen Seite weisende zueinander symmetrische Anformungen angeordnet sind.

Diese auf einer, das heißt der gleichen, Seite des Steges angeordneten Anformungen sind jeweils formmäßig angepasst zum formschlüssigen Eingriff in die einander benachbarten Kernprofile von zwei unmittelbar aneinander angrenzenden Rahmen und dienen hierdurch als formschlüssige Verbindung der beiden Rahmen miteinander.

Hierzu besitzt das entsprechend geformte Halteprofil eine dem Buchstaben "B" ähnliche Querschnittsform, wobei zwischen den beiden "Bäuchen" ein gewisser Abstand vorgesehen ist, in welchen in Einbaulage die beiden zueinander parallel verlaufenden Teilstege der aneinander angrenzenden Kernprofile von zwei benachbarten Rahmen eingreifen und hierdurch deren formschlüssige Verbindung bewirken. Gemäß einer vorteilhaften Ausführungsform der Erfindung ist auch in Betracht gezogen, dass zur Unterbringung der erforderlichen elektrischen Ausrüstung der Platz in von einem beziehungsweise von zwei Rahmen gebildeten Schaltschrank nicht ausreicht, sondern vier Rahmen zusammengefügt werden müssen.

Hierfür ist gemäß der Erfindung vorgesehen, dass zwei Halteprofile an ihren einander zugewandten Stegen miteinander unlösbar verbunden sind, wobei zwischen den Stegen ebenfalls ein gewisser Abstand eingehalten ist, in welchen die zueinander parallel verlaufenden Teilstege der aneinander angrenzenden Kernprofile von zwei benachbarten sowie der beiden darüber angeordneten Rahmen eingreifen.

Dementsprechend zeichnet sich ein erfindungsgemäßer elektrischer Schaltschrank dadurch aus, dass die Gestaltung einer jeden Rahmenecke vorsieht und dafür entsprechend vorbereitet ist, baugleiche Schaltschränke seitlich beziehungsweise ober- oder unterhalb mittels einer durch ein oder mehrere in das betreffende Verbindungsprofil einsteckbare Halteprofile gebildeten Steckverbindung miteinander zu verbinden.

Darüber hinaus bietet die Gestaltung einer jeden Rahmenecke ferner die Möglichkeit, an dem betreffenden Schaltschrank durch Verwendung eines in das betreffende Verbindungsprofil einsteckbaren Halteprofils auch einen Sockel zu befestigen.

Als weitere Besonderheit des erfindungsgemäßen elektrischen Schaltschranks ist ferner vorgesehen, dass der sichtbare Bereich einer jeden Rahmenecke mittels einer bedarfsweise eingefärbten Profilleiste aus Metall und/oder Kunststoff abdeckbar ist. Hierbei kann es sich sowohl um eine Verbundkonstruktion aus Metall und Kunststoff handeln als auch um entsprechend geformte Abdeckungen, die in der Gehäusefarbe des Schaltschranks oder in einer hierzu kontrastierenden Farbgebung ausgeführt sind.

Des Weiteren betrifft die Erfindung ein Verbindungsprofil beziehungsweise Schaltschrankverbindungsprofil zur kraftschlüssigen Verbindung von wenigstens zwei Schaltschränken, welches mehrteilig ausgebildet ist und ein Kernprofil sowie ein Deckprofil und/oder ein Halteprofil und/oder wenigstens eine an einem Profilende aufsetzbare Kappe aufweist, wobei das Kernprofil zur Verankerung an dem Rahmen beziehungsweise an der Rahmenecke des jeweiligen Schaltschrankes und das Deck- und/oder Halteprofil zur kraftschlüssigen Verbindung zweier Kernprofile und damit auch der Schaltschränke dient.

In vorteilhafter Ausbildung ist das Kernprofil teiloffen ausgestaltet, wobei der Querschnitt des Kernprofils als Grundform ein Rechteck, insbesondere ein Quadrat, mit abgerundeten Ecken aufweist, von denen eine Ecke mit daran anschließenden Flanken jeweils wenigstens bis zur Hälfte der Kantenlänge des Quadrates entfernt ist, derart, dass das Quadrat hier offen ist und damit auch das Kernprofil entlang seiner Längsachse offen ausgebildet ist.

Weiterhin ist vorsehbar, dass im verbauten Zustand des Kernprofits im Eckprofil des betreffenden Schaltschrankrahmens das offene Eck des Kernprofils in Richtung der Diagonale des jeweiligen Rahmens nach außen weist, so dass der offene Bereich den eckseitigen Abschluss des mit dem Eckprofil versehenen Rahmens bildet.

Gemäß einer weiteren Ausgestaltung ist das Deck- beziehungsweise Halteprofil am Kernprofil anbringbar, so dass das Deck- beziehungsweise Halteprofil mittels Schieben, Ansetzen oder Aufstecken beziehungsweise Aufclipsen form- und gegebenenfalls kraftschlüssig mit dem Kernprofil verbindbar ist. In seiner bestimmungsgemäßen Einbaulage schließt es bündig mit der Oberfläche des jeweiligen Seitenwandteils oder Deckel- beziehungsweise Bodenwandteils ab.

Zur Vermeidung von Wiederholungen wird zur weiteren Darlegung des Schaltschrankverbindungsprofils auf die vorstehenden Ausführungen zum erfindungsgemäßen Schaltschrank und das diesbezüglich beschriebene Verbindungsprofil verwiesen.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine ausschnittweise Darstellung eines Rahmenecks eines erfindungsgemäßen elektrischen Schaltschranks mit Anbauteilen;
- Fig. 2: eine weitere ausschnittweise Darstellung eines Rahmenecks eines erfindungsgemäßen elektrischen Schaltschranks mit Anbauteilen;
- Fig. 3: eine weitere ausschnittweise Darstellung eines Rahmenecks eines erfindungsgemäßen elektrischen Schaltschranks mit Illustration des Einbaus der Anbauteile;
- Fig. 4: eine ausschnittweise Darstellung je eines Rahmenecks von zwei nebeneinander angeordneten erfindungsgemäßen elektrischen Schaltschränken mit Anbauteilen;
- Fig. 5: die Darstellung gemäß Fig. 4 mit eingeführtem Halteprofil und
- Fig. 6: eine ausschnittweise Darstellung je eines Rahmenecks von zwei nebeneinander sowie zwei weiteren darüber angeordneten erfindungsgemäßen elektrischen Schaltschränken mit Anbauteilen.

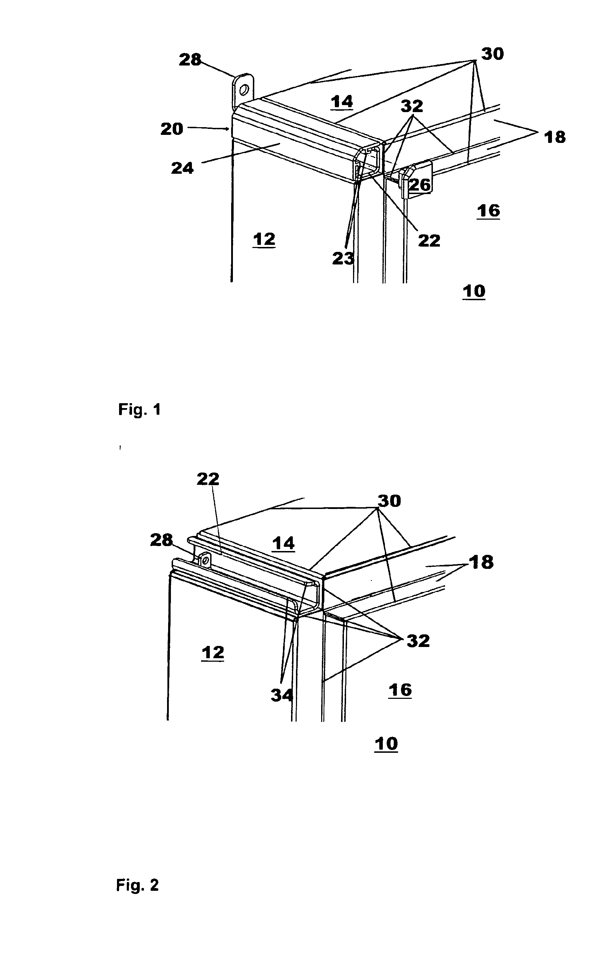

Fig. 1 zeigt eine ausschnittweise Darstellung eines Rahmenecks eines erfindungsgemäßen elektrischen Schaltschranks 10 mit Anbauteilen 20, 28, welcher Schaltschrank 10 als Rahmen ausgebildet ist, der jeweils aus zwei Seitenwandteilen 12 sowie aus einem Deckelwandteil 14 und einem gleichartigen Bodenwandteil zusammengesetzt ist und bedarfsweise mit einer Frontseite 16 versehen ist.

Vorteilhafterweise ist der Rahmen aus Blech gefertigt, wobei die einzelnen Wandteile vorgefertigt sein können. Hierbei sind die einzelnen Wandteile des Rahmens mit einander verschweißt. Es ist aber gemäß der Erfindung auch möglich, dass der Schaltschrank aus einem Kunststoff gefertigt ist, wobei auch in diesem Fall die Wandteile einzeln vorgefertigt sind und anschließend - vorzugsweise einstückig - zusammengefügt werden. Die weiteren Ausführungen nehmen Bezug auf einen aus Blech gefertigten Schaltschrank.

Aus Gründen der erforderlichen Gehäusesteifigkeit sowie auch wegen des äußeren Erscheinungsbildes sind die Wandteile an ihren Längsenden sowie zumindest an der in Einbaulage zur Frontseite weisenden Langseite jeweils mit einem Winkel 18 versehen, der vorzugsweise mittels Biegen aus dem Wandteil geformt ist.

Hierbei werden entsprechend bemessene Blechlappen aus dem jeweils zur Fertigung des betreffenden Wandteils vorgesehenen Blech entlang einer Biegelinie 30 abgewinkelt und an den abgewinkelten Kanten 32 mittels Schweißen mit einem benachbarten Wandteil miteinander verbunden und bildet auf diese Weise ein Rahmeneck, welches mit einem Verbindungsprofil 20 als Anbauteil ausgefüllt wird. Vorzugsweise werden die jeweils aneinanderstoßenden Kanten 32 mittels Laser miteinander verschweißt.

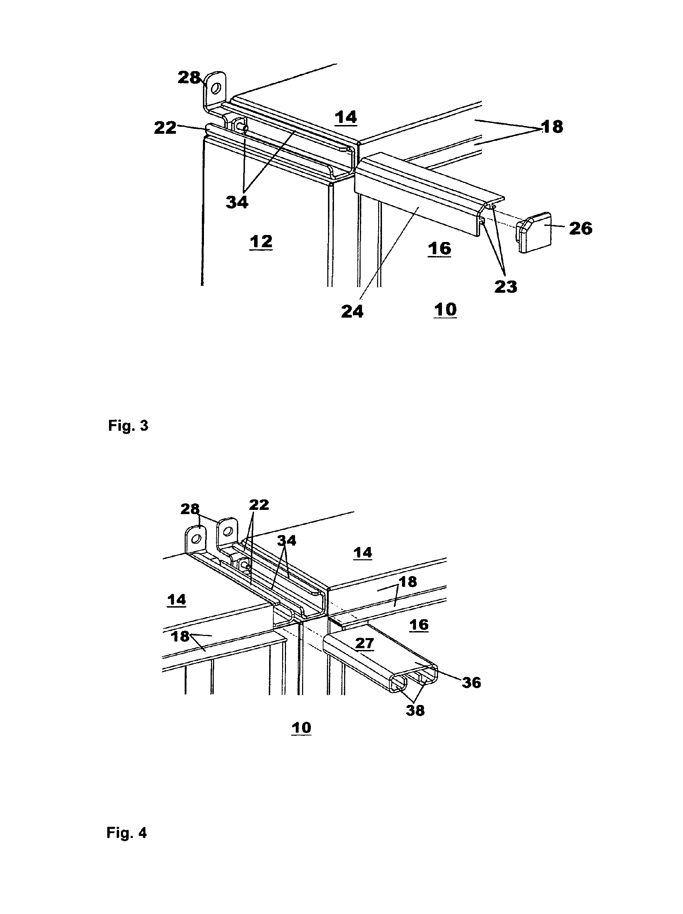

Ferner ist aus Fig. 1 entnehmbar, dass das Verbindungsprofil 20 aus einem Kernprofil 22 besteht, welches als teiloffenes Vierkant-Hohlprofil ausgebildet ist, bei dem ein Eckenbereich entfernt ist. Das Kernprofil 22 wird mittels eines Deckprofils 24, welches form- und/oder kraftschlüssig mit dem Kernprofil 22 verbindbar ist, zum Beispiel aufschiebbar, wie in Fig. 3 angedeutet, oder aufsetz- oder aufsteckbar, abgedeckt. Das Deckprofil 24 ist auf seiner Innenseite, wie aus Fig. 1 ersichtlich, mit L-förmigen, gegenläufige Nuten 23 bildenden Winkeln versehen, welche als Haltenuten dazu dienen, das Deckprofil 24 mit dem Kernprofil 22 zu verbinden. Das Ganze wird mit einer endseitig auf das Kernprofil 22 aufgesteckten Abschlusskappe 26 abgeschlossen. Außerdem ist jeweils am wandseitigen Ende des Rahmenecks ein Haltebügel 28 vorgesehen, der zur Wandbefestigung des elektrischen Schaltschranks 10 dient. Wie insbesondere aus Fig. 3 oder Fig. 4 ersichtlich, kann die Lage des Haltebügels 28 mittels einer Schraube eingestellt werden.

In Fig. 2 ist eine weitere ausschnittweise Darstellung eines Rahmenecks eines erfindungsgemäßen elektrischen Schaltschranks 10 mit Anbauteilen 20 in einer früheren Fertigungsstufe als in Fig. 1 dargestellt wiedergegeben, bei welcher das teiloffene Kernprofil 22 mit seinen freien Teilstegen 34 sowie ein Haltebügel 28 bereits am Rahmen montiert sind, nicht jedoch das Deckprofil 24 und die Abschlusskappe 26. Alle weiteren Merkmale der Erfindung sind bereits in Fig. 1 dargestellt und in der zugehörigen Beschreibung erläutert.

Fig. 3 zeigt eine weitere ausschnittweise Darstellung eines Rahmenecks eines erfindungsgemäßen elektrischen Schaltschranks, wobei die Funktion und der Zweck der einzelnen Merkmale bereits bei der Beschreibung der Fig. 1 und 2 erläutert worden sind und insoweit diese Angaben sich auch auf Fig. 3 erstrecken.

So ist in Fig. 3 klar erkennbar, dass beim Aufschieben des Deckprofils 24 auf das Kernprofil 22 das Deckprofil 24 mittels der am Kernprofil 22 angeordneten Teilstege 34, welche in die an der Innenseite des Deckprofils 24 angeformten Haltenuten 23 eingreifen, mit dem Kernprofil 22 verbunden wird.

Fig. 4 schließlich zeigt eine ausschnittweise Darstellung je eines Rahmenecks von zwei unmittelbar nebeneinander angeordneten erfindungsgemäßen elektrischen Schaltschränken 10, welche mittels eines aufschiebbaren Halteprofils 27 formschlüssig miteinander verbindbar sind.

Das Haltprofil 27 ist aus einem aus ebenem Flachmaterial bestehenden Steg 36 gebildet, an dessen beiden Längskanten jeweils eine bauchförmige Anformung 38 vorgesehen ist, welche zueinander symmetrisch sind und jeweils zum formschlüssigen Eingriff in die einander benachbarten Kernprofile 22 zweier unmittelbar aneinander angrenzender Rahmen von erfindungsgemäßen Schaltschränken 10 vorgesehen sind und diese hierdurch formschlüssig miteinander verbinden. Hierbei besitzt der längsverlaufende Steg 36 mit den zueinander symmetrischen Anformungen 38 eine dem Buchstaben "B" ähnliche Querschnittsform.

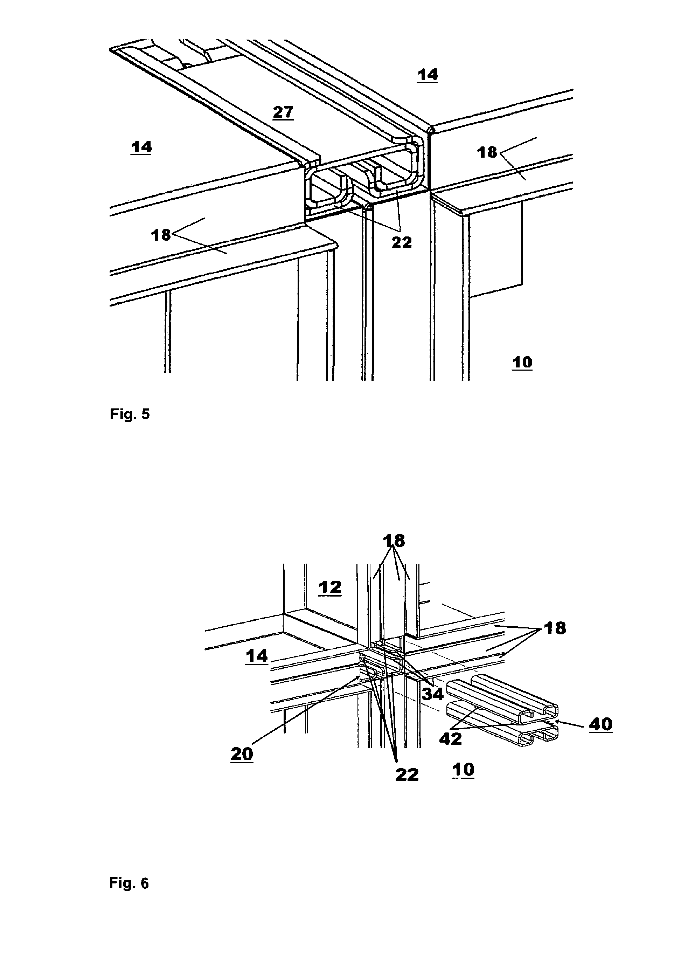

In Fig. 5 ist die Anordnung gemäß Fig. 4 wiedergegeben, wobei jedoch das Halteprofil 27 in das Kernprofil 22 jedes Rahmenecks eingeführt ist und die nebeneinander angeordneten Rahmen beziehungsweise Schaltschränke 10 miteinander formschlüssig verbindet.

In Fig. 6 ist eine ausschnittweise Darstellung je eines Rahmenecks von zwei unmittelbar nebeneinander sowie zwei weiteren darüber ebenfalls unmittelbar aneinander angrenzenden erfindungsgemäßen elektrischen Schaltschränken 10 gezeigt, welche ebenfalls mit Hilfe eines Halteprofils 40 ebenfalls formschlüssig miteinander verbunden sind.

Das Halteprofil 40 ist zusammengesetzt aus zwei in Fig. 4 und 5 gezeigten Halteprofilen 27, welche mit ihrer Stegseite 36 zueinander gewandt sind und im Abstand zueinander mittels Halteelementen 42 miteinander verbunden sind. Dementsprechend können die Halteelemente 42 Schraub- oder Nietverbindungen sein oder auf Abstand gehaltene Punktschweißungen, welche die vorgesehene Lage der beiden einzelnen Teile des Halteprofils 40 exakt fixieren.

Somit ermöglicht die Erfindung mehrere Schaltschränke effizient mit einem Verbindungsprofil durch einfaches Stecken zu verbinden, dabei spielt es keine Rolle, ob die jeweiligen Schränke vertikal oder horizontal verbunden werden, beide Ausführungsvarianten sind, auch kombiniert, ausbildbar und/oder realisierbar.

Durch die besondere Gestaltung des jeweiligen Eckbereichs des jeweiligen Schaltschrankes ist es darüber hinaus auf die gleiche Art und Weise auch möglich einen Sockel an den Schrank beziehungsweise mit dem Schrank zu verbinden.

Ebenfalls ist vorsehbar, dass in den jeweiligen Eckbereich eine Wandbefestigungslasche geschraubt werden kann.

Die vorliegende Erfindung umfasst dabei auch beliebige Kombinationen bevorzugter Ausführungsformen sowie einzelner Ausgestaltungsmerkmale oder Weiterbildungen, sofern diese sich nicht gegenseitig ausschließen.

### Bezugszeichenliste

- 10: Elektrischer Schaltschrank
- 12: Seitenwandteil
- 14: Deckel- oder Bodenwandteil
- 16: Frontseite
- 18: Winkel
- 20: Verbindungsprofil
- 22: Kernprofil
- 23: Haltenut
- 24: Deckprofil
- 26: Abschlusskappe
- 27: Halteprofil
- 28: Haltebügel
- 30: Biegekante
- 32: Schweißkante
- 34: Teilsteg
- 36: Steg
- 38: Anformung (Bauch)
- 40: Halteprofil
- 42: Haltelement

## Patentansprüche

1. Elektrischer Schaltschrank (10) mit zwei Seitenwandteilen (12) und je einem Deckel- und Bodenwandteil (14), welche jeweils miteinander verbunden sind, insbesondere miteinander verschweißt sind, und einen rechteckförmigen Rahmen bilden, der mit einer Rückseite und mit einer Frontseite verbindbar ist, **dadurch gekennzeichnet, dass** jedes Seitenwandteil (12) und jedes Deckelbeziehungsweise Bodenwandteil (14) entlang seiner Außenkanten (30) zu einer kastenähnlichen Form abgewinkelt ist, dass die abgewinkelten Kanten an den Stoßstellen (32) mit benachbarten abgewinkelten Außenkanten miteinander einstückig verbunden sind und an jeder Rahmenecke ein Eckprofil bilden, an welchem jeweils ein Verbindungsprofil (20) anschließbar ist.

2. Elektrischer Schaltschrank nach Anspruch 1, **dadurch gekennzeichnet, dass** das an jeder von einem Seitenwandteil (12) mit einem Deckelwandteil (14) beziehungsweise mit einem Bodenwandteil (14) gebildeten Rahmenecke angeordnete Verbindungsprofil (20) mit den jeweils benachbarten Wandteilen (12, 14) der Rahmenecke eine zumindest optische Verbindung bildet.

3. Elektrischer Schaltschrank nach Anspruch 1 oder 2, **dadurch gekennzeichnet, dass** das zur Anbringung im Eckprofil vorgesehene Verbindungsprofil (20) mehrteilig ist.

4. Elektrischer Schaltschrank nach Anspruch 3, **dadurch gekennzeichnet, dass** das Verbindungsprofil (20) von einem Kernprofil (22), einem Deckprofil (24) beziehungsweise einem Halteprofil (27, 40) und wenigstens einer an einem Profilende aufsetzbaren Abschlusskappe (26) gebildet ist.

5. Elektrischer Schaltschrank nach einem der vorherigen Ansprüche, **dadurch gekennzeichnet, dass** das Kernprofil (22) eines jeden Verbindungsprofils (20) gleich gestaltet ist.

6. Elektrischer Schaltschrank nach einem der Ansprüche 4 oder 5, **dadurch gekennzeichnet, dass** das Kernprofil (22) teiloffen gestaltet ist, wobei ein Eckbereich des Kernprofils entfernt ist und die offenen Flanken des Kernprofils (22) Teilstege (34) bilden.

7. Elektrischer Schaltschrank nach einem der vorherigen Ansprüche, **dadurch gekennzeichnet, dass** das Deckprofil (24) beziehungsweise das Halteprofil (27, 40) am Kernprofil (22) anbringbar ist und hierbei bündig mit der Oberfläche des jeweiligen Seitenwandteils (12) oder Deckel- beziehungsweise Bodenwandteils (14) abschließt.

8. Elektrischer Schaltschrank nach Anspruch 7, **dadurch gekennzeichnet, dass** jedes Deckprofil (24) zwei längsverlaufende, zueinander orthogonal angeordnete Längskanten aufweist, an welche jeweils unter einem Winkel kleiner 90° ein längsverlaufender Verbindungssteg anschließt und auf diese Weise ein Winkelprofil bildet, an dessen Innenseite zwei längsverlaufende Haltenuten (23) angeformt sind.

9. Elektrischer Schaltschrank nach Anspruch 8, **dadurch gekennzeichnet, dass** die Haltenuten (23) dazu vorgesehen sind, jeweils mit den entsprechenden Teilstegen (34) des teiloffenen Kernprofils (22) zusammenzuarbeiten.

10. Elektrischer Schaltschrank nach einem der Ansprüche 1 bis 7, **dadurch gekennzeichnet, dass** das Halteprofil (27) als längsverlaufender Steg (36) ausgebildet ist, an dessen beiden Längskanten jeweils eine bauchförmige Anformung (38) vorgesehen ist, welche zu einander symmetrisch sind und jeweils zum formschlüssigen Eingriff in die einander benachbarten Kernprofile (22) zweier unmittelbar aneinander angrenzender Rahmen vorgesehen sind und diese hierdurch formschlüssig miteinander verbinden.

11. Elektrischer Schaltschrank nach Anspruch 10, **dadurch gekennzeichnet, dass** der längsverlaufende Steg (36) mit den zueinander symmetrischen Anformungen (38) eine dem Buchstaben "**B**" ähnliche Querschnittsform hat.

12. Elektrischer Schaltschrank nach einem der vorherigen Ansprüche, **dadurch gekennzeichnet, dass** ein weiteres Halteprofil (40) gebildet ist, indem zwei Halteprofile (27) an ihren einander zugewandten Stegen (36) miteinander unlösbar verbunden sind, wobei zwischen den Stegen (36) ebenfalls ein gewisser Abstand eingehalten ist, in welchen die zueinander parallel verlaufenden Teilstege (34) der aneinander angrenzenden Kernprofile (22) von zwei benachbarten sowie der beiden darüber angeordneten Rahmen eingreifen.

13. Elektrischer Schaltschrank nach einem der vorherigen Ansprüche, **dadurch gekennzeichnet, dass** die Gestaltung einer jeden Rahmenecke dafür vorgesehen ist, baugleiche Schaltschränke seitlich beziehungsweise ober- oder unterhalb mittels einer durch in das betreffende Verbindungsprofil (20) einsteckbaren Halteprofils (27) gebildeten Steckverbindung miteinander zu verbinden.

14. Elektrischer Schaltschrank nach einem der vorherigen Ansprüche, **dadurch gekennzeichnet, dass** die Gestaltung einer jeden Rahmenecke dafür vorgesehen ist, an dem betreffenden Schaltschrank (10) durch Verwendung eines in das betreffende Verbindungsprofil (20) einsteckbaren Halteprofils (27) einen Sockel zu befestigen.

15. Elektrischer Schaltschrank nach einem der vorherigen Ansprüche, **dadurch gekennzeichnet, dass** der sichtbare Bereich einer jeden Rahmenecke mittels einer bedarfsweise eingefärbten Profilleiste aus Metall und/oder Kunststoff abdeckbar ist.

16. Elektrischer Schaltschrank (10) nach einem der vorherigen Ansprüche, **dadurch gekennzeichnet, dass** wenigstens zwei Teile, insbesondere die zwei Seitenwandteile (12) und das Deckel- sowie Bodenwandteil (14), einstückig miteinander verbunden sind, und insbesondere miteinander verschweißt sind.

17. Schaltschrankverbindungsprofil (20) zur kraftschlüssigen Verbindung von wenigstens zwei Schaltschränken, welches Verbindungsprofil (20) mehrteilig ausgebildet ist und ein Kernprofil sowie ein Deckprofil und/oder ein Halteprofil und/oder wenigstens eine an einem Profilende aufsetzbare Kappe aufweist, wobei das Kernprofil zur Verankerung an dem Rahmen beziehungsweise an der Rahmenecke des jeweiligen Schaltschrankes und das Deck- und/oder Halteprofil zur kraftschlüssigen Verbindung zweier Kernprofile und damit auch der jeweiligen Schaltschränke dient.
